# EUROPEAN PATENT APPLICATION

(11) **EP 2 369 816 A1**
(43) Date of publication of application: **28.09.2011**
(21) Application number: 10002851.3
(22) Date of filing: 18.03.2010
(51) Int. Cl.: H04M 1/05

(54) **Communication module in a jewellery**

(71) Applicant: novero GmbH, 40468 Düsseldorf (DE)
(72) Inventor: Schmitz, Uwe, 40229 Düsseldorf (DE); Jansen, Ralf, 45527 Hattingen (DE)
(74) Representative: Gesthuysen, von Rohr & Eggert

(57) **Abstract**

The invention relates to a system of jewelry items, wherein each jewelry item (1) of the system comprises at least two components, namely at least one mechanical carrier component (2) and at least one decorative component (3). For every jewelry item (1) of the system the decorative component (3) is separate from, but mechanically connected to the mechanical carrier component (2) or is formed directly on a front face of the mechanical carrier component (2). For every jewelry item (1) of the system the mechanical carrier component (2) comprises a housing (5) formed by a rear cover (6) and a front cover (7) attached to the rear cover (6). The decorative component (3) is separate from, but mechanically connected to the front cover (7) or is formed directly on the front cover (7). A communication module or at least one major component of a communication module is integrated into the jewelry item (1). Inside the housing (5) there is fixedly positioned a core element (8) of the communication module. The housing (5) has at least one access point to provide access to functional elements (9) of the core element (8). The rear cover (6) and/or the front cover (7) of the housing (5) is provided with fixation means (10) for the core element (8). The core element (8) of the communication module is identical for all jewelry items (1) of the system.

## Description

The present invention relates to a system of jewelry items according to the preamble of claim 1.

A system of jewelry items as known from prior use for decades is a set of jewelry items which all have the same or very similar decorative jewelry components. So the character of that system is defined by the used forms and the decorative appearance of the different jewelry items. The bearer carries e.g. a finger ring as well as a brooch and ear-rings all with the same jewelry "design".

While the decorative jewelry components of the different jewelry items are here very much alike, the mechanical carrier components are different. They are differently designed to fulfill the specific purpose of fixing the jewelry component at an intended location on the body or clothing of a bearer.

The prior art systems of jewelry items fulfill the purpose of decorating different locations on the body or clothing of a bearer, e.g. a pendant on a necklace around the neck of the bearer has the same jewelry "design" as a brooch worn on the clothing and ear-rings worn on both ears. The mechanical carrier component, however, is completely different for the different jewelry items.

Up to now, usually jewelry items are carried by a bearer along with, but bodily separate from wireless communication devices like wireless ear-phone devices or the like.

In a recent prior art there is provided a single jewelry item in the form of a pendant on a necklace (US 2008/0161023 A1). The pendant has a housing comprising a front cover carrying a decorative jewelry component like a pearl and a rear cover connected to the front cover. An ear-plug extends outwardly from the rear surface of the rear cover. The jewelry component on the front cover usually faces away from the bearer while the rear cover with the ear-plug usually faces towards the bearer.

Inside the housing there is a core element of a communication module. The housing has wall openings as access points for functional elements of the core element, i. e. volume control keys, a switch key, and indicating light as well as a power jack.

The necklace carrying the pendant has a first joining member attached to a first end of the necklace and a second joining member attached to the second end of the necklace. The two joining members together form the closure of the necklace. In the necklace a lead wire is disposed connecting the pendant to a microphone disposed in the second joining member of the closure.

The lead wire connects the microphone is connected to the core element inside the housing of the pendant. Likewise, a speaker in the ear-plug on the rear cover of the pendant is electrically connected to the core element.

The necklace has a double function, first to carry the pendant around the neck of the bearer, second to connect the microphone in the closure to the core element.

The core element in the housing of the pendant is part of a communication module to send/receive short-range wireless signals, in particular in the Bluetooth standard.

Such a jewelry item can be worn on the neck naturally if no communication is intended. As the distance between the microphone and the ear-piece and the distance between mouth and ear of the bearer are almost the same, the device can be used for communication easily when the ear-plug is inserted into the ear.

The jewelry component on the front cover of the housing can have many different designs. It can be a specific type of surface of the front cover also. Likewise, the necklace can be simple and basic, e.g. a leather string, or can be more sophisticated, e.g. decorated with pearls or other jewelry or costume jewelry elements.

A further prior art (US 6,594,370 Bl) is directed to a wireless personal communication system comprising one or two ear-phones worn as ear-plugs that communicate wirelessly with a remote processing unit worn as a necklace. That system is disclosed for wireless hearing aids, cellular telephones, pagers and wearable computer systems. The radio communication can have any form with the Bluetooth standard being preferred.

A further prior art (WO-A1-2008/156693) discloses a wireless headset designed as an ear-ring or ear-piece with a decorative component like a jewelry component on a front face and the components of a wireless communication link in or on a housing of the ear-piece. This prior art contains extensive information about the components and the technology of such an item.

The prior art in total can be considered to be applicable with all kinds of short-range wireless communication standards (Bluetooth, Wi-Fi, IR etc.), and also with future standards still to be developed (see also Weyers: "Integrated Circuits for a WPAN System", Verlag Dr. Hut, Munich 2010, ISBN 978-3-86853-355-2).

In both prior art communication systems the components of the jewelry item are all custom-made.

The object of the present invention is to provide a system of jewelry items where all jewelry items of the system are provided with communication modules.

Above mentioned object is achieved by a system of jewelry items comprising the features of the preamble of claim 1 together with the features of the characterizing part of claim 1.

For the purpose of this patent application a number of terms used are defined as follows:

A "jewelry item" includes true jewelry items as well as costume jewelry items and generally decorative items. In particular a jewelry item can be a chain, a pendant, a necklace, a choker, an ear-clip, an ear-ring, a brooch, a bracelet, a finger ring or the like.

A jewelry item has at least two "components", namely a mechanical carrier component and a decorative component. A decorative component itself can have one element or a number of elements (e.g. a chain of pearls having a large number of pearls).

A "communication module" is understood on the one hand as an item that has an extensive data storage memory and at least one data communication interface to receive data for storage and/or to transmit data to a speaker, i.e. has the functionality of e.g. an MP-3 player. On the other hand and preferably the communication module is a short-range wireless communication item. Preferably, however not exclusively, this term refers to a Bluetooth module. Other types use e.g. Wi-Fi or IR communication links or other standards (see the prior art mentioned above).

The communication module comprises a number of components, e.g. a core element with a chipset (electronic circuitry), a microphone (frequently, but not necessarily integrated in the core element; and obviously not necessary where only audio functions for listening are used as in an MP-3 player or the like), a speaker (for mono applications) or two or more speakers can be integrated as well. Necessarily, the communication module comprises a battery pack, mostly rechargeable, which is frequently but not necessarily integrated into the core element. Necessarily the core element also comprises user interface elements.

A "wireless personal communication system" comprises at least one communication module and at least one "base unit" remote from the communication module, in particular, but not exclusively a mobile phone or a personal digital assistant. The base unit is connected to the communication module by a "short-range wireless communication link" (Bluetooth, Wi-Fi, IR etc.; WPAN-system). A short-range wireless communication link typically permits communication up to a distance of 10 to 20 m.

An "access point" on the housing isn't necessarily an opening. It may also be a closed area of the housing if a contactless operation of a functional element is provided for.

The inventive system of jewelry items abandons the traditional approach that a system of jewelry items is characterized by the same jewelry or generally decorative "design" of its members. In the inventive system of jewelry items the jewelry "design" of the different jewelry items of the system is completely free and can be different from item to item.

The inventive system of jewelry items is primarily characterized by the fact that every jewelry item of the system has a specific design of the mechanical carrier component holding at least one major component of the communication module. The additional idea of the invention is to use this feature in order to split the system of jewelry items into two basic components. On the one hand there are the custom-made components which include the decorative component of each jewelry item. On the other hand the electronic parts of the jewelry items can be manufactured in mass production at a very low price. An important point is that at least the core element of the communication module is a standard element identical for all jewelry items of the system.

The design of the fixation means may vary within the system. For one type of jewelry items of the system the fixation means may be a simple screw connecting the core element to one of the covers of the housing of the mechanical carrier component. A different type of jewelry items of this system may have different fixation means in the form of rails or other geometrical structures on the internal surface of the covers.

In order to allow the use of one standard core element of the communication module within the housing of the mechanical carrier component the fixation means in or on the housing of the mechanical carrier component will preferably be identical for all jewelry items of the system. While the shape of the housing, in particular of the rear cover and the front cover, may vary following the design of the specific jewelry item of the system, the interior of the housings preferably is the same as far as the interfaces to the core element are concerned.

The present invention provides a technical architecture of the system of jewelry items with a platform that is designed in a way to provide dedicated interfaces between the technical components on the one hand and the decorative components on the other hand. The invention allows providing a wide variety of items based on a single technical platform.

The decorative component follows the rules of jewelry production or, in a more decorative part, of costume jewelry or generally decorative items. All or at least the major components of the communication module, however, are manufactured in high volumes independent of any variance or style.

The inventive platform technology allows a late assembly of the communication module on the one hand and jewelry on the other hand.

Now, preferred modifications and improvements of the inventive system of jewelry items are the subject matter of the dependent claims.

In a first preferred version of the inventive system the fixation means are structural forms on the internal surface of the rear cover and/or the front cover of the housing. In this construction the core element is fixed between the covers simply by attaching the front cover to the rear cover, e.g. by small screws.

In a further improvement of the inventive system the housing is provided with mechanical interfaces for connecting to other components of the jewelry item. Those mechanical interfaces can be different for different jewelry items of the system.

In a preferred version of this idea a jewelry item of the system may have a further mechanical carrier component that is provided separate from the housing with the housing being mechanical connected to, however preferably detachable from the further mechanical carrier component. The further mechanical carrier component is constructed to allow fixation of the specific jewelry item of the system at an intended location on the body or the clothing of a bearer.

Of course, the system needs electrical interfaces in the jewelry items also as explained in detail in the claims.

For example, it depends on the specific type of jewelry item of the system whether integrating a microphone of the communication module into the core element or at least positioning this microphone in the housing is a feasible construction under communication aspects.

In a preferred embodiment of the system one specific jewelry item is a pendant on a necklace, the pendant comprises the housing with the rear cover and the front cover, the necklace is the further mechanical carrier component, the housing is provided with a first mechanical interface providing a generally fixed connection to one end of the necklace and with a second mechanical interface providing a detachable connection to the other end of the necklace. The closure of the necklace is here preferably not at the neck but at the pendant, in particular and preferably by a magnetic joint forming the detachable connection. The term "generally fixed" means that the connection is not detachable in day to day use of the item. It should be possible, however, to open this connection for service or repair, in particular using an appropriate tool. The term "detachable connection" means that the user may open this connection easily, in particular without a specific tool.

A modification of a pendant on a necklace is a pendant on a choker. A choker is a semi-stiff, partly open ring around the neck with a free end of the choker preferably carrying the speaker of the communication module.

The construction of necklace or choker is preferably such that the speaker of the communication module is positioned on the necklace or at the free end of the choker, with a lead wire integrated into the necklace or the choker, the lead wire running from the speaker through the first mechanical interface to the core element in the housing.

Another jewelry item of the system may be a brooch carried on a clothing part of a bearer. The brooch comprises the further mechanical carrier component in the form of a base with a fastener. An ear-piece is detachably connected to the base. The ear-piece comprises the housing with the core element of the communication module as well a the decorative component. The housing is provided with a mechanical interface providing said detachable connection. The speaker of the communication module is positioned on or in the ear-piece. The specific design of this jewelry item of the inventive system shows a separation of the ear-piece from the base if the ear-piece is used. The ear-piece is connected to the base if it is not in use. However, as soon as the communication module is activated, e.g. if the music player is started or if a telephone call on the mobile phone is to be answered, the ear-piece is detached from the base and attached to the ear of the bearer (e.g. by means of a clip). Even there the ear-piece is a decorative element.

A similar concept can be achieved with a bracelet where the mechanical wristlet takes the position of the base of the brooch explained before.

As far as the microphone of the communication module is concerned, in one version a microphone of the communication module is integrated into the ear-piece. In another version a microphone together with an energy supply is integrated into a separate carrier, in particular the further mechanical carrier component, and a short-range wireless communication link is provided for between the microphone in the carrier and the core element in the ear-piece.

Now, preferred embodiments of the invention are described with reference to the drawings. In the drawings
- Fig. 1: shows a schematic view of a jewelry item of the inventive system, namely a pendant on a necklace,
- Fig. 2: shows an enlarged perspective view of the pendant of the jewelry item of Fig. 1,
- Fig. 3: shows the first cover and the decorative component of the pendant according to Fig. 2,
- Fig. 4: shows the core element of the communication module of the jewelry item of Fig. 1,
- Fig. 5: shows the rear cover of the housing of the pendant according to Fig. 2,
- Fig. 6: shows the item of Fig. 1 with the speaker lifted sidewise from the necklace,
- Fig. 7: shows a second embodiment of a jewelry item of the inventive system, here in the form of a pendant on a choker,
- Fig. 8a, b: shows a third embodiment of the invention in the form of a brooch, Fig. 8a in the "communication off" state, Fig. 8b in the "communication on" state,
- Fig. 9a, b: shows a fourth embodiment of the invention in form of a bracelet, otherwise similar to Fig. 9a, b.

The invention relates to a system of jewelry items as explained in the introductory part of the description. Also, the definitions in the introductory part of the description shall apply throughout the complete patent application.

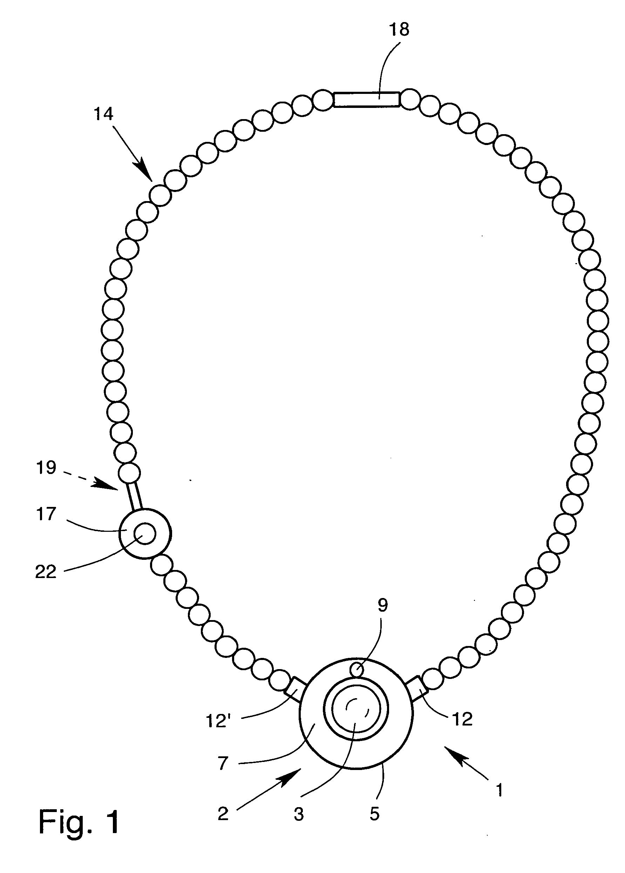

Fig. 1 to 5 shows a first embodiment of a jewelry item of the inventive system with all its components.

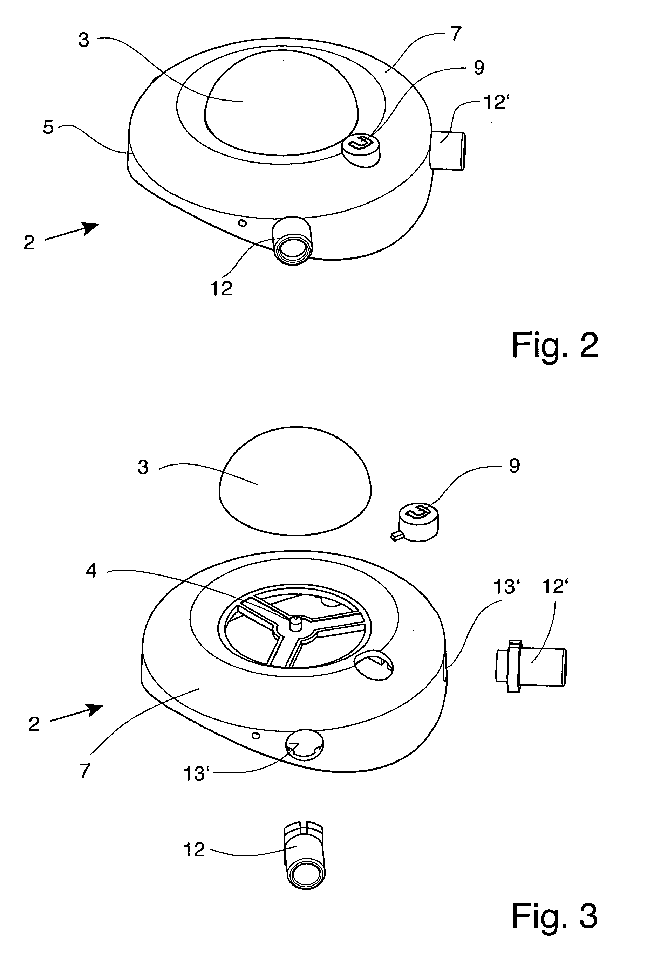

Every jewelry item 1 of the system comprises at least two components. There is at least one mechanical carrier component 2 and at least one decorative component 3. In Fig. 3 the different components can be seen in a kind of explosion view.

The decorative component 3 is separate from the mechanical carrier component 2, but is normally mechanically connected to the mechanical carrier component 2. In Fig. 3 a connecting pin 4 can be seen on the mechanical carrier component 2 which serves to connect the decorative component 3, here a half pearl, to the mechanical carrier component 2.

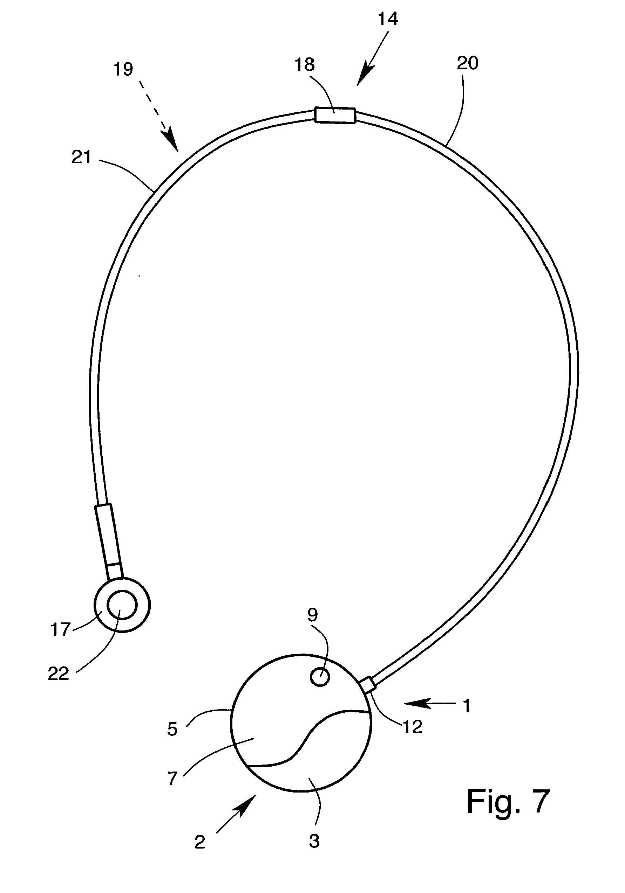

In an alternative version the decorative component 3 can also be formed directly on a front face of the mechanical carrier component 2. This can be seen in Fig. 7 at the choker jewelry item.

As said in the introductory part of the description for the inventive system of jewelry items the design of the decorative components of the different jewelry items may be completely different. The common characteristic of the items of the system can be found in the mechanical carrier component.

Now, for each jewelry item of the system the mechanical carrier component 2 comprises a housing 5 formed by a rear cover 6 and a front cover 7 attached to the rear cover 6.

In the embodiment of Fig. 1-5 the decorative component 3, namely a half pearl, is separate from, but mechanically connected to the front cover 7 of the housing 5. The connecting pin 4 is positioned in the middle of the front cover 7.

In the embodiment of Fig. 7 the decorative component 3 is a decorative cover, e.g. a gold accessory formed directly on a front face of the front cover 7 of the housing 5.

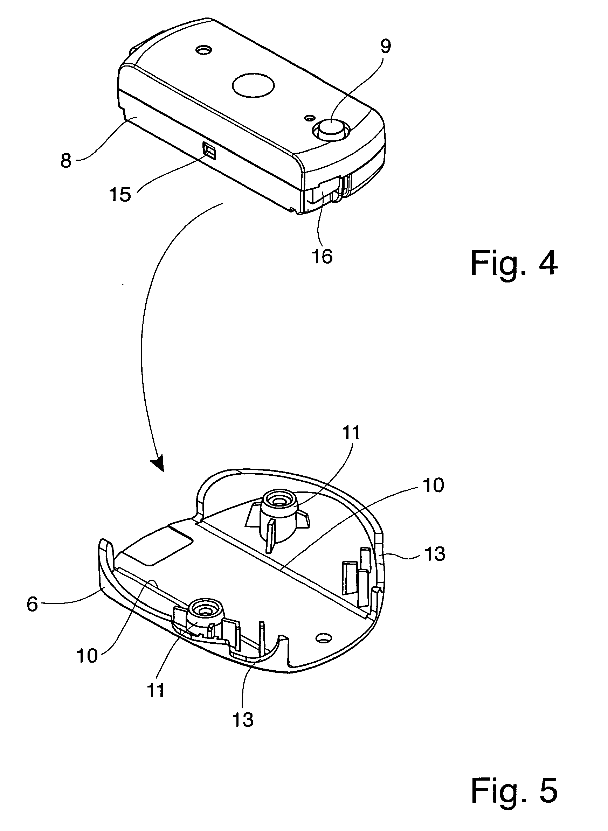

From Fig. 2 to 5 it can be obtained that the decorative component 3 is separate from, but mechanically connected to the front cover 7 or is formed directly on the front cover 7, and a communication module or at least a major component of a communication module is integrated into the jewelry item 1. To this end there is fixedly positioned in the housing 5 at least a core element 8 of the communication module. The arrow in Fig. 4 to Fig. 5 indicates where the core element 8 is seated in the rear cover 6.

In the introductory part of the description the core element 8 was defined. This core element 8 has a housing and in the housing a chip-set for the electronics of the communication module, in particular including the data storage memory for the first version of the communication module (e.g. MP-3 player) and/or of the wireless communication link established by the communication module in the second, preferred version of the communication module. Such a core element 8 is a mass production standard item. A typical Bluetooth core element 8 will have a length of about 40 mm, a width of about 18 mm and a height of about 11 mm. Future Bluetooth core elements 8 will have smaller dimensions. The core element 8 is the "heart" of the communication module. In the preferred second version it establishes the short-range wireless communication link based on a typical standard like Bluetooth, Wi-Fi, IR or the like (see the prior art mentioned above). For components like antenna, receiver, transmitter etc. reference is made to the prior art mentioned above.

The housing 5 further has a number of access points to provide access to functional elements 9 of the core element 8. Those functional elements 9 are e.g. an on/off button or multi function button, a volume button, an indicator light and a power jack for recharging the battery in the core element 8.

Fig. 1 to 3 shows the access point for functional element 9 (on/off button) - here designed as a decorative part of the jewelry item 1 on the front cover 7.

Fig. 5 shows a perspective view of the rear cover 6. It is provided with fixation means 10 for positioning the core element 8 in the housing 5. The fixation means 10 here are forms, namely side rails, on the internal surface of the rear cover 6 of the housing 5. It can be seen that the housing of the core element 8 fits exactly between the fixation means 10. Similar fixation means may be provided on the internal surface of the front cover 7.

Fig. 5 also shows bosses 11 on the rear cover 6 where mounting screws can be positioned to connect the front cover 7 to the rear cover 6.

According to the invention at least the core element 8 of the communication module is identical for all jewelry items 1 of the inventive system. Preferably, also the fixation means 10 in or on the housing 5 of the mechanical carrier component 2 are identical for all jewelry items 1 of the inventive system. However, it is also possible that different jewelry items of the system may have different fixation means. The pendant housing 5 shown in Fig. 1 to 5 of the drawings may have the fixation means 10 as forms on the internal surfaces of the covers 6, 7. In a different jewelry item 1 of the system the core element 8 may be fixed by a simple screw driven into a socket provided on the housing of the core element 8.

It is essential, however, that the core element 8 as the heart of the communication module is the same for all jewelry items 1 of the system. Other components of the communication module should be standard components also, e.g. the microphone (if used), the speaker, the battery pack and usual interface elements.

In the preferred version of the embodiment of Fig. 1 to 5 the rear cover 6 and/or the front cover 7 of the housing 5 is/are provided with mechanical interfaces 12, 12' for connecting the housing 5 to other components of the jewelry item 1, wherein said mechanical interfaces 12, 12' can be different for different jewelry items of the system. In Fig. 5 parts of the mechanical interfaces 12, 12' can be seen on the rear cover 6 in the form of openings 13 at the sides of the rear cover 6. In Fig. 3 similar openings 13' aligned with the openings 13 in the rear cover 6 can be seen on the front cover 7.

Fig. 1 of the drawings shows a preferred embodiment of the invention in that for this specific jewelry item 1 a further mechanical carrier component 14 in the form of a necklace is provided separate from the housing 5 with the housing 5 being mechanically connected to, however preferably detachable from the further mechanical carrier component 14. The further mechanical carrier component 14 is constructed to allow fixation of the specific jewelry item 1 of the system at an intended location on the body or the clothing of a bearer. The necklace 14 allows to place the pendant 2, 3 with its housing 5 in the suitable position around the neck of a bearer.

In particular Fig. 4 of the drawings discloses a specific construction in that the core element 8, optionally in combination with the rear cover 6 and/or the front cover 7 of the housing 5, is provided with electrical interfaces 15 for connecting with a microphone 16 and/or a speaker 17 and/or other electronic components of the communication module. In the embodiment of Fig. 1 to 5 the microphone 16 is integrated in the core element 8 (Fig. 4) while there is the electrical interface 15 for the speaker 17 at the side of the housing of the core element 8.

In Fig. 1 the speaker 17 can be seen on the further mechanical carrier component 14, namely the necklace.

In the present invention a battery pack is integrated into the core element 8. It can also be separate from the core element 8. However, it should be positioned in the housing 5.

Fig. 1 to 6 disclose one specific embodiment of a jewelry item 1 of the system. As already explained it is a pendant 2, 3 on the necklace 14 which is the further mechanical carrier component of the item. The pendant 2, 3 comprises the housing 5 with the rear cover 6 and the front cover 7, the necklace 14 is the further mechanical carrier component. The housing 5 is provided with a first mechanical interface 12 providing a generally fixed connection with one end of the necklace 14 and with a second mechanical interface 12' providing a detachable connection with the other end of the necklace 14. In the present invention the second mechanical interface 12' is a magnetic joint. The interface 12' on the housing 5 has one magnet and the detachable end of the necklace 14 has a counterpart. So the necklace 14 can be easily detached from the housing 5 at this position.

In Fig. 1 a further specific design of the necklace 14 can be seen. Here the necklace 14 has a fake closure 18 opposite to the pendant 2, 3 so that the necklace 14 gives the appearance of a traditional necklace which normally has a decorative closure opposite a pendant.

Fig. 7 shows a second embodiment of a jewelry item 1 of the inventive system. Here the specific jewelry item 1 of the system is a pendant 2, 3 on a choker 14, the pendant 2, 3 comprises the housing 5 with the rear cover 6 and the front cover 7. The choker 14 is the further mechanical carrier component 14. The housing 5 is provided with a first mechanical interface 12 providing a generally fixed connection with one end of the choker 14, the other end of the choker 14 being a free end. On the pendant 2, 3 the decorative component 3 is just a golden appliance on the front face of the front cover 7 of the housing 5. The on/off button 9 can be seen on the front cover 7 as the only functional eleelement 9. On the right side of the housing 5 the first mechanical interface 12 is provided on the housing 5.

As far as the position of the speaker 17 is concerned, in the embodiment of Fig. 1 and of Fig. 7 it is provided that the speaker 17 of the communication module is positioned on the necklace 14 or at the free end of the choker 14, with a lead wire 19 integrated into the necklace 14 or the choker 14, the lead wire 19 running from the speaker 17 through the first mechanical interface 12 to the core element 8 in the housing 5.

The lead wire 19 is in Fig. 7 integrated into the mechanical structure of the choker 14. The mechanical structure of the choker 14 has a first part being a semi-stiff half-ring 20 extending from the first mechanical interface 12 to the fake closure 18, and a second part of a more flexible line 21 leading from the fake closure 18 to the free end with the speaker 17 provided in the form of an ear-plug.

The speaker 17 itself can have a combination of an ear-plug and/or a clip on the rear and a further decorative component 22 on the front.

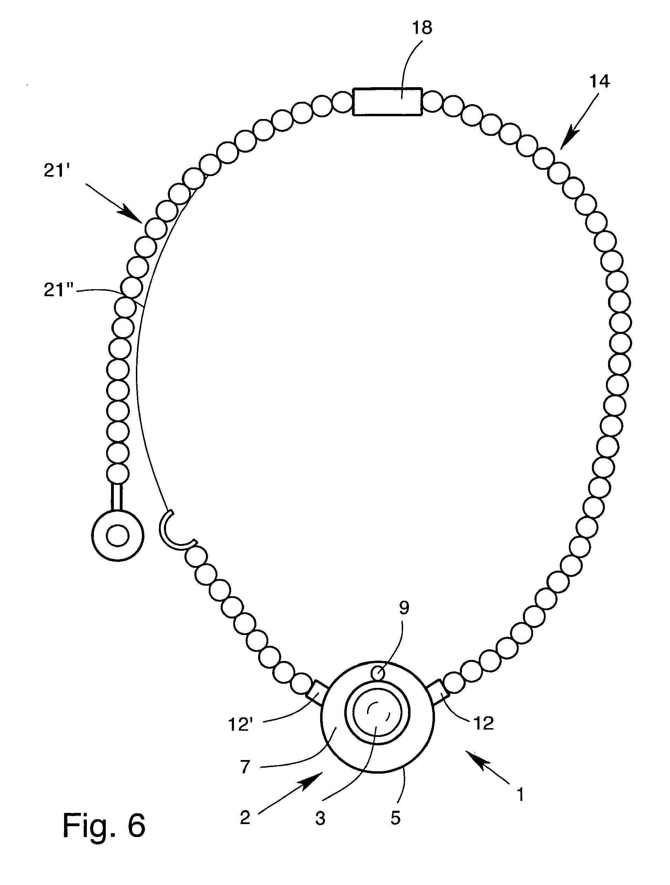

In the embodiment of Fig. 1 to 6 the speaker 17 on the flexible line 21' can be moved away from a suspension strand 21 " remaining between the fake closure 18 and the second mechanical interface 12' of the necklace 14 if the communication module is in use (Fig. 6). So the ear-plug with the speaker 17 can be inserted into the user's ear.

In the embodiment of Fig. 7 the flexible line 21 of the choker 14 can be simply moved to insert the ear-plug of the speaker 17 into the ear of the user. Due to the specific design of the half ring 20 of the choker 14 the choker 14 will still remain safely positioned around the neck of the bearer.

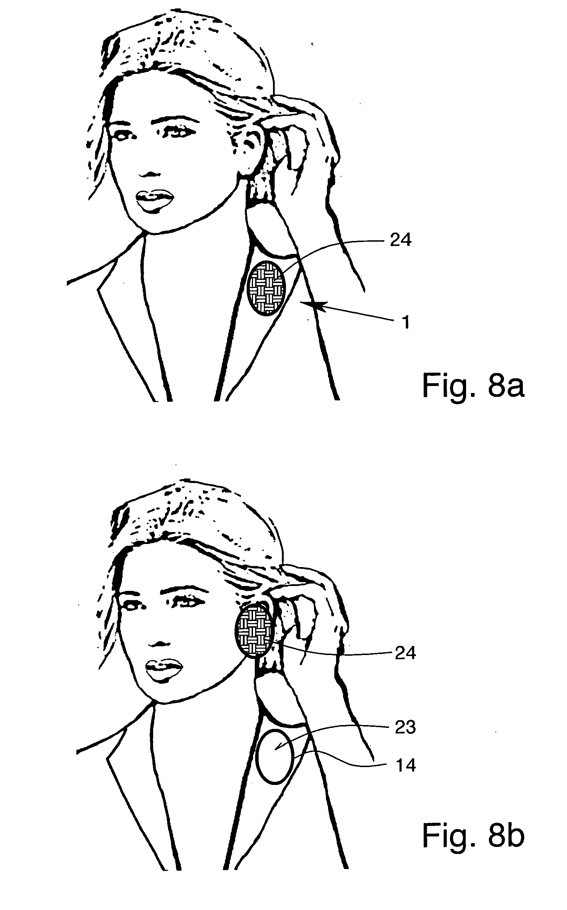

Fig. 8a,b disclose a further version of a jewelry item 1 of the inventive system. The embodiment of Fig. 8 is characterized in that one specific jewelry item 1 of the system is a brooch comprising the further mechanical carrier component 14 in the form of a base with a fastener 23. An ear-piece 24 is detachably connected to the base, the ear-piece 24 comprises the housing 5 with the core element 8 of the communication module as well a the decorative component 3, the housing 5 is provided with a mechanical interface 12 providing said detachable connection, the speaker 17 of the communication module is positioned on or in the ear-piece 24.

Fig. 8a shows the brooch 1 in the "communication-off" state with the ear-piece 24 safely positioned on the base 14. Fig. 8b shows the brooch 1 in the "communication-on" state. The bearer has detached the ear-piece 24 from the base 14 and now wears the ear-piece 24 like an ear-clip either with an ear-plug inserted in the ear or alternatively with the speaker 17 on the rear cover 6 of the housing 5 of the ear-piece 24.

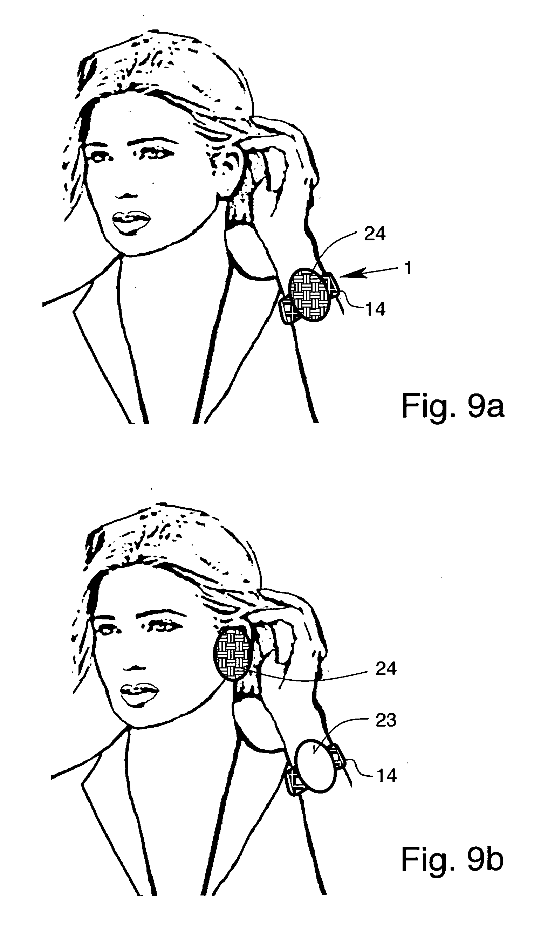

A further embodiment of a jewelry item 1 of the inventive system of jewelry items is described with reference to Fig. 9a, b. Here the jewelry item 1 is a bracelet comprising the further mechanical carrier component 14 in the form of a wristlet with a fastener 23. An ear-piece 24 is detachably connected to the wristlet. The ear-piece 24 comprises the housing 5 with the core element 8 of the communication module as well a the decorative jewelry component 3. The housing 5 is provided with a mechanical interface 12 providing said detachable connection. The speaker 17 of the communication module is positioned on or in the ear-piece 24. Again, the two situations of use are disclosed in Fig. 9a on the one hand and Fig. 9b on the other hand similar to Fig. 8a and Fig. 8b for the former embodiment of a brooch 1 as the jewelry item.

There are possible versions for the position of the microphone 16 in particular, but not only in the embodiment of Fig. 8 on the one hand and Fig. 9 on the other hand.

In a first version a microphone 16 of the communication module is integrated into the ear-piece 24. In a second version a microphone 16 together with an energy supply is integrated into the further mechanical carrier component 14 and a short-range wireless communication link is provided for between the microphone 16 in the further mechanical carrier component 14 and the core element 8 in the ear-piece 24. In a third version the microphone may be placed in a separate housing and a short-range wireless communication link is provided for between microphone and core element.

The present patent application is one of the following related applications:
- EP .......... "System of jewelry items"
   Attorney-reference; 09.0478.2
- EP .......... "Hand wearable controller for a remotely located electronic device"
   Attorney-reference: 10.0019.2
- EP .......... "Communication item"
   Attorney-reference: 10.0020.2
- EP .......... "Communication item as a pendant on a choker"
   Attorney-reference: 10.0084.2
- EP .......... "Communication item as a pendant on a necklace"
   Attorney-reference 10.0085.2
- EP .......... "Wireless audio headset with an ear-piece"
   Attorney reference 10.0086.2

## Claims

1. System of jewelry items,
wherein each jewelry item (1) of the system comprises at least two components, namely at least one mechanical carrier component (2) and at least one decorative component (3),
wherein for every jewelry item (1) of the system the decorative component (3) is separate from, but mechanically connected to the mechanical carrier component (2) or is formed directly on a front face of the mechanical carrier component (2), ,
**characterized in that**
for every jewelry item (1) of the system, the mechanical carrier component (2) comprises a housing (5) formed by a rear cover (6) and a front cover (7) attached to the rear cover (6),
the decorative component (3) is separate from, but mechanically connected to the front cover (7) or is formed directly on the front cover (7),
a communication module or at least one major component of a communication module is integrated into the jewelry item (1),
inside the housing (5) there is fixedly positioned at least a core element (8) of the communication module and the housing (5) has at least one access point to provide access to functional elements (9) of the core element (8),
the rear cover (6) and/or the front cover (7) of the housing (5) is provided with fixation means (10) for the core element (8),
the core element (8) of the communication module is identical for all jewelry items (1) of the system.

2. System of jewelry items according to claim 1, **characterized in that** the fixation means (10) in or on the housing (5) of the mechanical carrier component (2) are also identical for all jewelry items (1) of the system.

3. System of jewelry items according to any one of the preceding claims, **characterized in that**
the fixation means (10) are structural forms on the internal surface of the rear cover (6) and/or the front cover (7) of the housing (5).

4. System of jewelry items according to any one of the preceding claims, **characterized in that**
for every jewelry item (1) of the system
the rear cover (6) and/or the front cover (7) of the housing (5) is/are provided with mechanical interfaces (12, 12') for connecting the housing (5) to other components of the jewelry item (1),
wherein said mechanical interfaces (12, 12') can be different for different jewelry items of the system.

5. System of jewelry items according to any one of the preceding claims, **characterized in that**
for at least one jewelry item (1) of the system,
a further mechanical carrier component (14) is provided separate from the housing (5) with the housing (5) being mechanically connected to, however preferably detachable from the further mechanical carrier component (14), wherein the further mechanical carrier component (14) is constructed to allow fixation of the specific jewelry item (1) of the system at an intended location on the body or the clothing of a bearer.

6. System of jewelry items according to any one of the preceding claims, **characterized in that**
for every jewelry item (1) of the system,
the core element (8), optionally in combination with the rear cover (6) and/or the front cover (7) of the housing (5), is provided with electrical interfaces (15) for connecting with a microphone (16) and/or a speaker (17) and/or other electronic components of the communication module.

7. System of jewelry items according to any one of the preceding claims, **characterized in that**
for at least one jewelry item (1) of the system,
a microphone (16) of the communication module is integrated into the core element (8) or is provided separately from but electrically connected to the core element (8) and is positioned within or on the housing (5).

8. System of jewelry items according to any one of the preceding claims, **characterized in that**
for every jewelry item (1) of the system,
a battery pack is integrated into the core element (8) or is separate from the core element (8) but positioned within the housing (5).

9. System of jewelry items according to claim 5 and optionally to claim 6, 7 or 8, **characterized in that**
one specific jewelry item (1) of the system is a pendant (1) on a necklace (14), the pendant (1) comprises the housing (5) with the rear cover (6) and the front cover (7),
the necklace (14) is the further mechanical carrier component (14),
the housing (5) is provided with a first mechanical interface (12) providing a generally fixed connection with one end of the necklace (14) and with a second mechanical interface (12') providing a detachable connection with the other end of the necklace (14),
wherein, preferably, the second mechanical interface (12') is a magnetic joint.

10. System of jewelry items according to claim 5 and optionally to claim 6, 7 or 8, **characterized in that**
one specific jewelry item (1) of the system is a pendant (1) on a choker (14), the pendant (1) comprises the housing (5) with the rear cover (6) and the front cover (7),
the choker (14) is the further mechanical carrier component (14),
the housing (5) is provided with a first mechanical interface (12) providing a generally fixed connection with one end of the choker (14), the other end of the choker (14) being a free end.

11. System of jewelry items according to claim 9 to 10, **characterized in that** the speaker (17) of the communication module is positioned on the necklace (14) or at the free end of the choker (14),
with a lead wire (19) integrated into the necklace (14) or the choker (14), the lead wire (19) extending from the speaker (17) through the first mechanical interface (12) to the core element (8) in the housing (5).

12. System of jewelry items according to any one of the claims 1 to 8, **characterized in that**
one specific jewelry item (1) of the system is a brooch comprising the further mechanical carrier component (14) in the form of a base (14) with a fastener (23),
an ear-piece (24) is detachably connected to the base (14),
the ear-piece (24) comprises the housing (5) with the core element (8) of the communication module as well as the decorative component (3),
the housing (5) is provided with a mechanical interface providing said detachable connection,
the speaker (17) of the communication module is positioned on or in the ear-piece (24).

13. System of jewelry items according to any one of the claims 1 to 8, **characterized in that**
one specific jewelry item (1) of the system is a bracelet comprising the further mechanical carrier component (14) in the form of a wristlet (14) with a fastener (23),
an ear-piece (24) is detachably connected to the wristlet (14),
the ear-piece (24) comprises the housing (5) with the core element (8) of the communication module as well as the decorative component (3),
the housing (5) is provided with a mechanical interface providing said detachable connection,
the speaker (17) of the communication module is positioned on or in the ear-piece (24).

14. System of jewelry items according to claim 12 or 13, **characterized in that** a microphone (16) of the communication module is integrated into the ear-piece (24).

15. System of jewelry items according to claim 12 or 13, **characterized in that** a microphone (16) together with an energy supply is integrated into the further mechanical carrier component (14) and a short-range wireless communication link is provided for between the microphone (16) in the further mechanical carrier component (14) and the core element (8) in the ear-piece (24).
